# EUROPEAN PATENT SPECIFICATION

(11) **EP 4 290 121 B1**
(45) Date of publication and mention of the grant of the patent: **01.10.2025**
(21) Application number: 22177448.2
(22) Date of filing: 07.06.2022
(51) Int. Cl.: F17C 13/12

(54) **A GAS CONSUMER SYSTEM FOR A VEHICLE**
GASVERBRAUCHERSYSTEM FÜR EIN FAHRZEUG
SYSTÈME CONSOMMATEUR DE GAZ POUR UN VÉHICULE

(43) Date of publication of application: 13.12.2023
(73) Proprietor: Volvo Construction Equipment AB, 631 85 Eskilstuna (SE)
(72) Inventor: KVIST, Roland, 363 91 BRAÅS (SE); EKMAN, Gordon, 342 63 MOHEDA (SE); ÖRKENRUD, Kim, 35264 VÄXJÖ (SE)
(74) Representative: Kransell & Wennborg KB

(56) References cited:
- DE-A1- 102013 226 913
- DE-A1- 102020 119 676
- JP-A- 2007 106 262
- US-A- 3 886 885

## Description

### TECHNICAL FIELD

The present invention relates to a gas consumer system for a vehicle. The present invention also relates to a method of controlling a gas consumer system. Although the invention will mainly be directed to a gas consumer system comprising a fuel cell as a gas consumer, it should be readily understood that other gas consumers operable by a hydrogen gas. Also, the present invention will be described in relation to a working machine in the form of an articulated haulers, but the invention should be understood as applicable for other working machines and other types of vehicles as well.

### BACKGROUND

The propulsion systems of vehicles are continuously developed to meet the demands from the market. A particular aspect relates to the emission of environmentally harmful exhaust gas. Therefore, vehicles are developed to use an alternative propulsion fuel compared to a conventional internal combustion engine propelled by diesel or petrol. Hydrogen fuel is one conceivable alternative, either for supply to a fuel cell, where the fuel cell generates electric power fed to a battery or directly to an electric traction motor, or supply to a hydrogen internal combustion engine using hydrogen fuel for its propulsion. The hydrogen gas is provided in one or more hydrogen gas tanks and fed to the hydrogen gas consumer via conduits.

However, leakage from the hydrogen gas tanks to the hydrogen gas consumer can result in a severe collection of ignitable hydrogen gas. Small leakage may also be potentially difficult to detect without the use costly and complex sensors.

According to its abstract, DE 10 2020 119676 relates to a pressurized container system for a motor vehicle. The pressure container system comprises a plurality of pressure vessels for storing fuel. The plurality of pressure vessels are fluidically connected to one another via an internal fluid connection. The internal fluid connection is surrounded in a substantially fluid-tight manner by an external fluid connection. Both the internal fluid connection and the external fluid connection are each connected in fluid-tight fashion to the plurality of pressure vessels.

It is therefore a desire to increase the safety for vehicles operable by hydrogen gas.

### SUMMARY

It is thus an object of the present invention to at least partially overcome the above-described deficiencies.

According to a first aspect, there is provided a gas consumer system for a vehicle, the gas consumer system being configured to generate power by consuming gas, the gas consumer system comprising a gas consumer comprising an inlet configured to receive a flow of gas, at least one gas tank, the gas tank comprising a gas tank outlet, a conduit connecting the gas tank outlet of the tank to the inlet of the gas consumer, and an elongated sleeve attached to the inlet of the gas consumer and to the gas tank outlet of the gas tank, wherein the conduit is housed within the elongated sleeve, the elongated sleeve comprising a sleeve outlet configured to convey leakage of gas between the gas consumer and the gas tank away from the gas consumer system.

The wording "gas consumer" should be construed as an arrangement consuming gas. The gas consumer may, as a non-limiting example, be a fuel cell receiving a flow of hydrogen gas for generating electric power. Thus, the fuel cell consumes hydrogen gas when generating electric power. As another non-limiting example, the gas consumer may be a gas consuming engine using gas for combustion. An example of such an engine is a hydrogen internal combustion engine where hydrogen gas is consumed when the hydrogen internal combustion engine generates a mechanical motion for propelling the vehicle. The gas consumer may also be an internal combustion engine.

The present invention is based on the insight that small leakage of gas is difficult to detect during operation of the vehicle. By using an elongated sleeve to house the conduit between the gas tank and the gas consumer, potential leakage is collected in the elongated sleeve, thereby reducing the risk of obtaining accumulated amounts of ignitable gas in the compartment provided with the gas tank, the conduits and/or the gas consumer. Instead, the present invention efficiently directs the gas through the sleeve outlet to a position at which it is safer to expel the potential leakage. An advantage is thus that the risk of a potential accident caused by leakage gas is reduced.

According to an example embodiment, the gas consumer system may comprise a plurality of gas tanks, each gas tank having an individual gas tank outlet, wherein the conduit is connected between each gas tank outlet and the inlet of the gas consumer, wherein the conduit further extends between each of the plurality of gas tank outlets.

Hereby, leakage between the tanks can hereby also be collected in the elongated sleeve and thereafter directed through the sleeve outlet.

According to an example embodiment, the elongated sleeve may comprise an elongated portion extending in a direction away from the gas consumer and the gas tank, the sleeve outlet being arranged at an end position of the elongated portion. An advantage is that the potential leakage can be fed to a position relatively far away from the gas consumer and the gas tank. The elongated portion also enables the user of the gas consumer system to choose the position at which potential leakage should be directed.

According to an example embodiment, the end position of the elongated portion may be configured to be arranged above, or rearward of, a passenger compartment of the vehicle. This position is of particular advantage since an operator of the vehicle hereby can detect the leakage, while the position at the same is safer from an ignition point of view.

According to an example embodiment, each of the plurality of tanks may comprise a valve at the gas tank outlet. Furthermore, and according to an example embodiment, each of the valves may be housed within the elongated sleeve. The valves are advantageously provided for being able to control the flow of gas from the tanks to the gas consumer. However, a valve may be a potential leakage position as it is conventionally provided with sealings formed by sealing material that may become less efficient by age, and thus a potential position for leakage. Providing the elongated sleeve to also house the valves hereby prevents potentially undesired leakage.

According to an example embodiment, the gas consumer system may further comprise a gas sensor arranged in the elongated sleeve, the gas sensor being configured to detect the presence of leakage of gas in the elongated sleeve.

The use of a gas sensor in the elongated sleeve is particularly advantageous since the gas sensor can transmit a signal to e.g. the below described control unit upon detecting the presence of gas in the elongated sleeve, whereby the control unit can take a precautionary action. The operator of the vehicle can also be informed of the presence of a leakage. If the leakage is severe, the operator can decide to immediately stop the vehicle, and if the leakage is less severe, the operator can decide to drive the vehicle for maintenance. Preferably, and according to an example embodiment, the gas sensor may be positioned at the sleeve outlet.

According to an example embodiment, the gas consumer system may further comprise a control unit comprising processing circuitry operably connected to each of the valves, the processing circuitry being configured to receive a signal from the gas sensor, the signal being indicative of a level of leakage gas present in the elongated sleeve, compare the level of leakage gas with a predetermined threshold, and control the valves to assume a closed position in which gas is prevented from leaving the gas tanks when the level of leakage gas is above the predetermined threshold.

The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

Hereby, gas can no longer be fed from the gas tanks to the gas consumer, whereby the damage can be substantially reduced.

According to an example embodiment, the processing circuitry may be further operatively connected to the gas consumer, the processing circuitry being configured to control the gas consumer to assume a non-power generating mode when the level of leakage gas is above the predetermined threshold.

Hence, the operation of the gas consumer is stopped upon a leakage detection. As described above, and according to an example embodiment, the gas consumer may be a fuel cell. In such case, the operation of the fuel cell is turned off and the electric machine is receiving electric power solely from e.g. the vehicle batteries. If the vehicle is a hybrid vehicle operated by both an electric machine and an internal combustion engine, the vehicle can be propelled solely by the internal combustion engine until the leakage is stopped if a state of charge level of the batteries is too low.

According to an example embodiment, the processing circuitry may be connected to a human machine interface display, the processing circuitry being configured to transmit a signal indicative of gas leakage to the human machine interface display when the level of leakage gas is above the predetermined threshold. Accordingly, and as briefly described above, the operator is hereby informed of the leakage and can take a suitable action for further operation of the vehicle.

According to a second aspect, there is provided a method of controlling a gas consumer system, the gas consumer system comprising a gas consumer comprising an inlet configured to receive a flow of gas, at least one gas tank, the gas tank comprising a gas tank outlet provided with a valve, a conduit connecting the gas tank outlet of the gas tank to the inlet of the gas consumer, and an elongated sleeve attached to the inlet of the gas consumer and to the gas tank outlet, wherein the conduit is housed within the elongated sleeve, the elongated sleeve comprising a sleeve outlet configured to convey leakage of gas between the gas consumer and the gas tank away from the gas consumer system, the method comprising determining a level of leakage gas present in the elongated sleeve, and controlling the valve to assume a closed position in which gas is prevented from leaving the gas tank when the level of leakage gas is above a predetermined threshold.

Effects and features of the second aspect are largely analogous to those described above in relation to the first aspect.

According to a third aspect, there is provided a vehicle comprising an electric traction motor, an energy storage system configured to feed electric power to the electric traction motor during propulsion, and a gas consumer system according to any one of the embodiments described above in relation to the first aspect, wherein the gas consumer is electrically connected to the energy storage system and configured to feed electric power generated in the gas consumer to the energy storage system.

According to a fourth aspect, there is provided a computer program comprising program code means for performing the method of the second aspect when the program is run on a computer.

According to a fifth aspect, there is provided a non-transitory computer readable medium carrying a computer program comprising program code for performing the method of the second aspect when the program product is run on a computer.

Effects and features of the third, fourth and fifth aspects are largely analogous to those described above in relation to the first aspect.

Further features of, and advantages will become apparent when studying the appended claims and the following description. The skilled person will realize that different features may be combined to create embodiments other than those described in the following, without departing from the scope of the present disclosure.

### BRIEF DESCRIPTION OF THE DRAWINGS

The above, as well as additional objects, features, and advantages, will be better understood through the following illustrative and non-limiting detailed description of exemplary embodiments, wherein:
Fig. 1 is a lateral side view illustrating an example embodiment of a working machine in the form of an articulated hauler;
Fig. 2 is a schematic illustration of a gas consumer system according to an example embodiment,
Fig. 3 is a schematic illustration of a gas consumer system according to another example embodiment, and
Fig. 4 is a flow chart of a method of controlling a gas consumer system according to an example embodiment.

### DETAILED DESCRIPTION

The present invention will now be described more fully hereinafter with reference to the accompanying drawings, in which exemplary embodiments are shown. The invention may, however, be embodied in many different forms and should not be construed as limited to the embodiments set forth herein; rather, these embodiments are provided for thoroughness and completeness. Like reference character refer to like elements throughout the description.

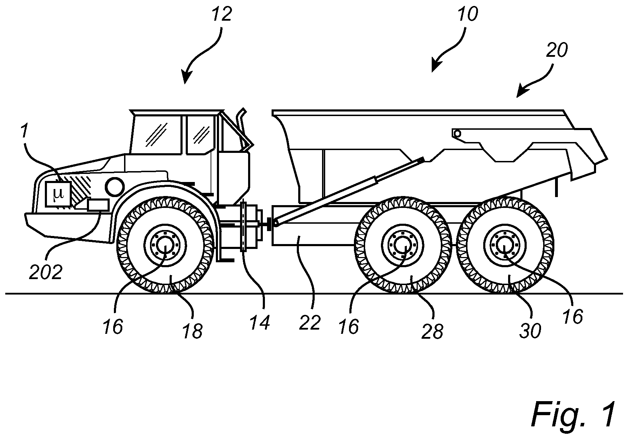

Reference is made to Fig. 1, which is a lateral side view illustrating a working machine according to an example embodiment. The Fig. 1 working machine 10 is exemplified as a frame-steered articulated hauler, also called dumper.

As can be seen from Fig. 1, the working machine 10 illustrated therein comprises a front working machine section 12 comprising a front frame 14 and a first wheel axle 16, also referred to as a front wheel axle 16, connected to a first pair of wheels 18, although only the left front wheel is visible in Fig. 1.

Moreover, as seen in Fig. 1, the working machine 10 comprises a rear working machine section 20 comprising a rear frame 22, a second wheel axle 24, also referred to as a front rear axle 24 and a third wheel axle 26, also referred to as a back rear axle 26. The front rear axle 24 is connected to a second pair of wheels 28 and the back rear axle 26 is connected to a third pair of wheels 30.

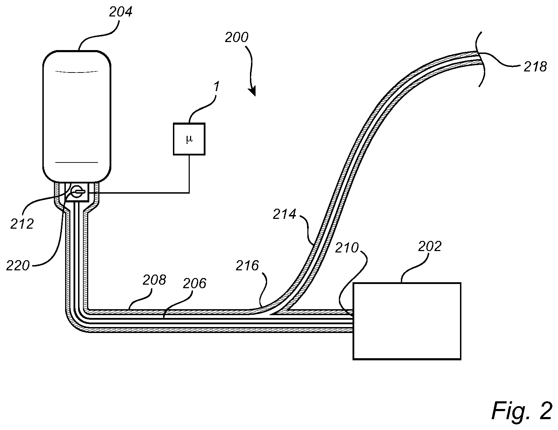

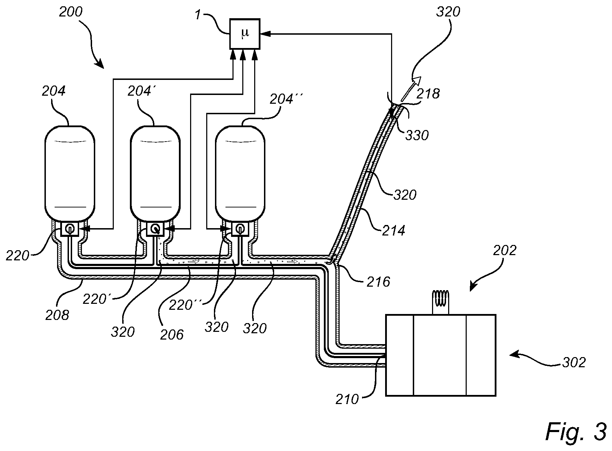

Although the Fig. 1 embodiment of the working machine 10 comprises two rear axles 24, 26, it is also envisaged that embodiments of the working machine may be equipped with only one rear axle (not shown). The working machine 10 further comprises a gas consumer system (exemplified in detail in Figs. 2 and 3) comprising a gas consumer 202.

Moreover, the working machine 10 also comprises a control unit 1. The control unit 1 preferably forms part of the below described gas consumer system for controlling operation thereof. Further, the control unit 1 comprises control circuitry which may include a microprocessor, microcontroller, programmable digital signal processor or another programmable device. The control circuitry may also, or instead, each include an application specific integrated circuit, a programmable gate array or programmable array logic, a programmable logic device, or a digital signal processor. Where the control circuitry includes a programmable device such as the microprocessor, microcontroller or programmable digital signal processor mentioned above, the processor may further include computer executable code that controls operation of the programmable device. It should be understood that all or some parts of the functionality provided by means of the control circuitry may be at least partly integrated with an upper layer vehicle control unit (not shown) of the working machine. Accordingly, the control unit 1 thus controls gear shifting of the below described transmission arrangements as well as operation of the electric machines. When controlling gear shifting, the control unit 1 preferably controls operation of the various shift elements of the transmission arrangements.

In order to describe the gas consumer system in further detail, reference is made to Fig. 2 which is a schematic illustration of the gas consumer system 200 according to an example embodiment. As can be seen in Fig. 2, the gas consumer system 200 comprises a gas consumer 202. The gas consumer 202 is configured to receive a flow of gas from a gas tank 204. When receiving the flow of gas, the gas consumer 202 consumes the gas to generate power. The gas consumer 202 exemplified in Fig. 2 can be e.g. a hydrogen internal combustion engine receiving a flow of hydrogen gas from the gas tank 204. The hydrogen gas is thus combusted in the hydrogen internal combustion engine to generate a torque on e.g. a crank shaft, which torque is propelling the wheels of the working machine. As will be evident from the description below with reference to Fig. 3, the gas consumer 202 may alternatively be a fuel cell which operational functionalities are described in further detail below.

Moreover, the gas consumer system 200 also comprises a conduit 206 connecting the gas tank 204 and the gas consumer 202 to each other. Hence, the gas in the gas tank 204 is fed to the gas consumer 202 via the conduit 206. Also, the gas consumer system 200 further comprises an elongated sleeve 208. The elongated sleeve 208 is, as also depicted in detail in Fig. 2, housing the conduit 206. Thus, the conduit 206 is fully encapsulated inside the elongated sleeve 208. In addition, the elongated sleeve 208 is also attached to an inlet 210 of the gas consumer 202 as well as to a gas tank outlet 212 of the gas tank 204. Hereby, any gas leakage that might occur in the gas consumer system 200 will be collected inside the elongated sleeve 208.

Moreover, the elongated sleeve 208 also comprises an elongated portion 214. The elongated portion 214 extends from an intermediate position 216 of the elongated sleeve 208 to a sleeve outlet 218. The intermediate position 216 is arranged on the elongated sleeve 208 at a position between the gas tank 204 and the gas consumer 202. Potential leakage of gas is thus conveyed to the sleeve outlet 218 via the elongated portion 214. The position of the sleeve outlet 218 relative to the working machine 10 depends on the particular gas conveyed from the gas tank 204 to the gas consumer 202. As a non-limiting example, a heavy gas, i.e. a gas with relatively high density, is preferably vented downwards, while a light gas with a relatively low density is preferably vented upwards. In the latter case, and according to a non-limiting example, the elongated portion, and in turn the sleeve outlet 218 is arranged above and/or rearward of a passenger compartment of the working machine 10.

The elongated sleeve is preferably made from a material which is flexible and of low weight, i.e. the density of the elongated sleeve is preferably low. The elongated sleeve 208 must not be designed to withstand high pressure levels as its purpose is to merely convey leakage gas. Also, a lower weight of the elongated sleeve is beneficial as it will not substantially affect the overall weight of the working machine 10.

The gas consumer system 200 also comprises a valve 220. The valve 220 is arranged and connected to the gas tank outlet 212. The valve 220 is preferably controlled by means of control unit 1. Hence, the control unit 1 controls the valve 220 between an open position in which gas from the gas tank 204 is fed to the gas consumer 202, and a closed position in which gas is prevented from leaving the gas tank 204, i.e. prevented to reach the gas consumer 202. As depicted in Fig. 2, the valve 220 is housed within the elongated sleeve 208. Put it differently, the valve 220 as well as the conduit 206 are both housed within the elongated sleeve 208.

In order to describe the gas consumer system 200 according to another example embodiment, reference is now made to Fig. 3. The exemplified gas consumer system 200 in Fig. 3 operates and comprises the same features as described above in relation to the embodiment depicted in Fig. 2, unless stated otherwise. Accordingly, features present in the Fig. 3 embodiment as well as in the Fig. 2 embodiment will not be described in the following.

In Fig. 3, the gas consumer 202 is exemplified as a fuel cell 302. The fuel cell 302 receives gas, preferably hydrogen gas, from the gas tank 202. The gas is directed into the inlet 210 of the fuel cell 302, whereby a chemical reaction is formed together with air for generating electric power. The electric power is in turn fed to an electric traction motor or a battery of the working machine 10.

The gas consumer system 200 exemplified in Fig. 3 also, compared to the example depicted in Fig. 2, comprises a plurality of gas tanks 204, 204', 204". Each of the plurality of gas tanks 204, 204', 204" comprises a valve 220, 220', 220" connected in a similar manner as described above in relation to the Fig. 2 embodiment. Hence, the plurality of valves is all housed within the elongated sleeve 208. As can be seen in Fig. 3, a leakage of gas 320 occurs at one of the valves 220' connected to one of the gas tanks 204'. The leakage gas 320 is conveyed through the elongated sleeve 208, i.e. through the volume formed between the external surface of the conduit 206 and the internal surface of the elongated sleeve 208. At the above-described intermediate position 216, the leakage gas 320 is directed into the elongated portion 214 of the elongated sleeve 208. The leakage gas 320 is conveyed through the elongated portion 214 until reaching the sleeve outlet 218.

At the sleeve outlet 218, the gas consumer system 200 comprises a gas sensor 330. The gas sensor 330 is connected to the control unit 1 and configured to transmit a signal indicative of the presence of gas in the elongated sleeve 208 to the control unit 1. When the control unit 1 receives a signal indicating the presence of gas in the elongated sleeve 208, the control unit 1 can control each of the valves 220, 220', 220" to assume the closed position, in particular if the gas level is above a predetermined threshold limit. Hereby, the leakage may be potentially stopped, and the damage reduced.

As an alternative, or complement, the control unit 1 can also transmit a control signal to the gas consumer 202 to assume a non-power generating mode, i.e. to stop operation of the gas consumer 202.

It should be readily understood that the Fig. 2 example embodiment may also comprise the gas sensor 320 and the functionality to take action once detecting the presence of gas in the elongated sleeve, although the gas sensor and such functionalities are not described above or illustrated in Fig. 2.

Furthermore, upon detecting the presence of gas, the control unit 1, or processing circuitry of the control unit 1, can also transmit a signal to a human machine interface display (not shown) in the cabin compartment to inform the operator of a leakage. As an alternative, the detected leakage of gas can be transmitted via telematics/Bluetooth/Wi-Fi, etc. to a control station at a remote distance from the working machine, whereby a suitable action can be taken.

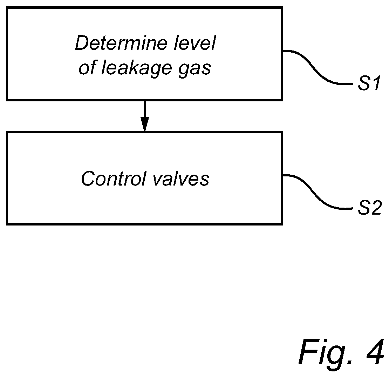

In order to sum up, reference is made to Fig. 4 which is a flow chart of a method of controlling the above-described gas consumer system 200. During operation of the working machine 10, a level of leakage gas 320 in the elongated sleeve 208 is determined S1. This is preferably determined by the control unit 1 receiving a signal from the gas sensor 330. When the level of leakage gas 320 is above a predetermined threshold, the valve 220 is controlled S2 to assume a closed position in which gas is prevented from leaving the gas tank 204.

It is to be understood that the present disclosure is not limited to the embodiments described above and illustrated in the drawings; rather, the skilled person will recognize that many changes and modifications may be made within the scope of the appended claims.

## Claims

1. A gas consumer system (200) for a vehicle (10), the gas consumer system being configured to generate power by consuming gas, the gas consumer system comprising:
- a gas consumer (202) comprising an inlet (210) configured to receive a flow of gas,
- at least one gas tank (204, 204', 204"), the gas tank comprising a gas tank outlet (212),
- a conduit (206) connecting the gas tank outlet of the tank to the inlet of the gas consumer, and
- an elongated sleeve (208) attached to the inlet of the gas consumer and to the gas tank outlet of the gas tank, wherein the conduit is housed within the elongated sleeve, **characterised in that** he elongated sleeve comprising a sleeve outlet (218) configured to convey leakage of gas between the gas consumer and the gas tank away from the gas consumer system.

2. The gas consumer system (200) according to claim 1, wherein the gas consumer system comprises a plurality of gas tanks (204, 204', 204"), each gas tank having an individual gas tank outlet, wherein the conduit is connected between each gas tank outlet and the inlet of the gas consumer, wherein the conduit further extends between each of the plurality of gas tank outlets.

3. The gas consumer system (200) according to any one of claims 1 or 2, wherein the elongated sleeve comprises an elongated portion (214) extending in a direction away from the gas consumer and the gas tank, the sleeve outlet (218) being arranged at an end position of the elongated portion.

4. The gas consumer system (200) according to claim 3, wherein the end position of the elongated portion is configured to be arranged above, or rearward of, a passenger compartment of the vehicle.

5. The gas consumer system (200) according to any one of preceding claims 2 - 4, wherein each of the plurality of tanks comprises a valve (220. 220', 220") at the gas tank outlet.

6. The gas consumer system (200) according to claim 5, wherein each of the valves are housed within the elongated sleeve.

7. The gas consumer system (200) according to any one of the preceding claims, wherein the gas consumer system further comprises a gas sensor (330) arranged in the elongated sleeve, the gas sensor being configured to detect the presence of leakage of gas in the elongated sleeve.

8. The gas consumer system (200) according to claim 7, wherein the gas sensor is positioned at the sleeve outlet (218).

9. The gas consumer system (200) according to any one of claims 7 or 8 in combination with any one of claims 5 or 6, wherein the gas consumer system further comprises a control unit (1) comprising processing circuitry operably connected to each of the valves, the processing circuitry being configured to:
- receive a signal from the gas sensor, the signal being indicative of a level of leakage gas present in the elongated sleeve,
- compare the level of leakage gas with a predetermined threshold, and
- control the valves to assume a closed position in which gas is prevented from leaving the gas tanks when the level of leakage gas is above the predetermined threshold.

10. The gas consumer system (200) according to claim 9, wherein the processing circuitry is further operatively connected to the gas consumer, the processing circuitry being configured to control the gas consumer to assume a non-power generating mode when the level of leakage gas is above the predetermined threshold.

11. The gas consumer system (200) according to any one of claims 9 or 10, wherein the processing circuitry is connected to a human machine interface display, the processing circuitry being configured to transmit a signal indicative of gas leakage to the human machine interface display when the level of leakage gas is above the predetermined threshold.

12. The gas consumer system (200) according to any one of the preceding claims, wherein the gas consumer is a fuel cell.

13. A method of controlling a gas consumer system, the gas consumer system comprising a gas consumer comprising an inlet configured to receive a flow of gas, at least one gas tank, the gas tank comprising a gas tank outlet provided with a valve, a conduit connecting the gas tank outlet of the gas tank to the inlet of the gas consumer, an elongated sleeve attached to the inlet of the gas consumer and to the gas tank outlet, wherein the conduit is housed within the elongated sleeve, the elongated sleeve comprising a sleeve outlet configured to convey leakage of gas between the gas consumer and the gas tank away from the gas consumer system, and a control unit comprising processing circuitry, the method comprising:
- determining, by the processing circuitry, a level of leakage gas present in the elongated sleeve, and
- controlling, by the processing circuitry, the valve to assume a closed position in which gas is prevented from leaving the gas tank when the level of leakage gas is above a predetermined threshold.

14. A vehicle comprising an electric traction motor, an energy storage system configured to feed electric power to the electric traction motor during propulsion, and a gas consumer system according to any one of claims 1 - 12, wherein the gas consumer is electrically connected to the energy storage system and configured to feed electric power generated in the gas consumer to the energy storage system.

15. A computer program comprising program code means for performing the method of claim 13 when the program is run on a computer.

16. A non-transitory computer readable medium carrying a computer program comprising program code for performing the method of claim 13 when the program product is run on a computer.

## Patentansprüche

1. Gasverbrauchersystem (200) für ein Fahrzeug (10), wobei das Gasverbrauchersystem konfiguriert ist, um Strom durch den Verbrauch von Gas zu erzeugen, das Gasverbrauchersystem umfassend:
- einen Gasverbraucher (202) umfassend einen Einlass (210), der zur Aufnahme eines Gasstroms konfiguriert ist
- mindestens einen Gastank (204, 204', 204"), der Gastank umfassend einen Gastankauslass (212),
- eine Leitung (206), die den Gastankauslass des Tanks mit dem Einlass des Gasverbrauchers verbindet, und
- eine längliche Hülse (208), die am Einlass des Gasverbrauchers und am Gastankauslass des Gastanks angebracht ist, wobei die Leitung in der länglichen Hülse untergebracht ist, **dadurch gekennzeichnet, dass** die längliche Hülse einen Hülsenauslass (218) umfasst, der konfiguriert ist, um Leckagen von Gas zwischen dem Gasverbraucher und dem Gastank vom Gasverbrauchersystem wegzuleiten.

2. Gasverbrauchersystem (200) nach Anspruch 1, wobei das Gasverbrauchersystem mehrere Gastanks (204, 204', 204") umfasst, wobei jeder Gastank einen individuellen Gastankauslass aufweist, wobei die Leitung zwischen jedem Gastankauslass und dem Einlass des Gasverbrauchers verbunden ist, wobei sich die Leitung ferner zwischen jedem der mehreren Gastankauslässe erstreckt.

3. Gasverbrauchersystem (200) nach einem der Ansprüche 1 oder 2, wobei die längliche Hülse einen länglichen Abschnitt (214) umfasst, der sich in einer Richtung weg vom Gasverbraucher und dem Gastank erstreckt, wobei der Hülsenauslass (218) an einer Endposition des länglichen Abschnitts angeordnet ist.

4. Gasverbrauchersystem (200) nach Anspruch 3, wobei die Endposition des länglichen Abschnitts so konfiguriert ist, dass sie über oder hinter einem Fahrgastraum des Fahrzeugs angeordnet ist.

5. Gasverbrauchersystem (200) nach einem der vorhergehenden Ansprüche 2-4, wobei jeder der mehreren Tanks ein Ventil (220, 220', 220") am Gastankauslass umfasst.

6. Gasverbrauchersystem (200) nach Anspruch 5, wobei jedes der Ventile in der länglichen Hülse untergebracht ist.

7. Gasverbrauchersystem (200) nach einem der vorhergehenden Ansprüche, wobei das Gasverbrauchersystem ferner einen Gassensor (330) umfasst, der in der länglichen Hülse angeordnet ist, wobei der Gassensor konfiguriert ist, um das Vorhandensein von Gasleckagen in der länglichen Hülse zu erkennen.

8. Gasverbrauchersystem (200) nach Anspruch 7, wobei der Gassensor am Hülsenauslass (218) angeordnet ist.

9. Gasverbrauchersystem (200) nach einem der Ansprüche 7 oder 8 in Kombination mit einem der Ansprüche 5 oder 6, wobei das Gasverbrauchersystem ferner eine Steuereinheit (1) umfasst, die eine Verarbeitungsschaltung umfasst, die betriebsmäßig mit jedem der Ventile verbunden ist, wobei die Verarbeitungsschaltung konfiguriert ist, zum:
- Empfangen eines Signals vom Gassensor, wobei das Signal eine Konzentration des in der länglichen Hülse vorhandene Leckgases darstellt,
- Vergleichen der Konzentration des Leckgases mit einem vorbestimmten Schwellenwert; und
- Steuern der Ventile, dass sie eine geschlossene Position einnehmen, in der verhindert wird, dass Gas aus den Gasbehältern austritt, wenn die Konzentration des in der länglichen Hülse vorhandene Leckgases über dem vorbestimmten Schwellenwert liegt.

10. Gasverbrauchersystem (200) nach Anspruch 9, wobei die Verarbeitungsschaltung ferner betriebsmäßig mit dem Gasverbraucher verbunden ist, wobei die Verarbeitungsschaltung konfiguriert ist, um den Gasverbraucher so steuert, dass er einen Nicht-Stromerzeugungsmodus annimmt, wenn die Konzentration des Leckgases über dem vorbestimmten Schwellenwert liegt.

11. Gasverbrauchersystem (200) nach einem der Ansprüche 9 oder 10, wobei die Verarbeitungsschaltung mit einer Mensch-Maschine-Schnittstellenanzeige verbunden ist, wobei die Verarbeitungsschaltung konfiguriert ist, um ein Signal an die Mensch-Maschine-Schnittstellenanzeige zu senden, das einen Gasaustritt anzeigt, wenn die Konzentration des Leckgases über dem vorbestimmten Schwellenwert liegt.

12. Gasverbrauchersystem (200) nach einem der vorhergehenden Ansprüche, wobei der Gasverbraucher eine Brennstoffzelle ist.

13. Verfahren zur Steuerung eines Gasverbrauchersystems, das Gasverbrauchersystem umfassend einen Gasverbraucher, der einen Einlass umfasst, der konfiguriert ist, um einen Gasstrom zu empfangen, mindestens einen Gastank, wobei der Gastank einen Gastankauslass umfasst, der mit einem Ventil versehen ist, eine Leitung, die den Gastankauslass des Gastanks mit dem Einlass des Gasverbrauchers verbindet, eine längliche Hülse, die an dem Einlass des Gasverbrauchers und an dem Gastankauslass angebracht ist, wobei die Leitung in der länglichen Hülse untergebracht ist, wobei die längliche Hülse einen Hülsenauslass umfasst, der konfiguriert ist, um Gasleckagen zwischen dem Gasverbraucher und dem Gastank von dem Gasverbrauchersystem wegzuleiten, und eine Steuereinheit, die eine Verarbeitungsschaltung umfasst, das Verfahren umfassend:
- Bestimmen einer in der länglichen Hülse vorhandenen Leckgaskonzentration durch die Verarbeitungsschaltung, und
- Steuern des Ventils durch die Verarbeitungsschaltung, um eine geschlossene Position einzunehmen, in der verhindert wird, dass Gas den Gastank verlässt, wenn die Konzentration des Leckgases über einem vorbestimmten Schwellenwert liegt.

14. Fahrzeug umfassend einen elektrischen Antriebsmotor, ein Energiespeichersystem, das konfiguriert ist, dass es dem elektrischen Antriebsmotor während des Antriebs elektrischen Strom zuzuführen, und ein Gasverbrauchersystem nach einem der Ansprüche 1-12, wobei der Gasverbraucher elektrisch mit dem Energiespeichersystem verbunden und konfiguriert ist, um in dem Gasverbraucher erzeugten elektrischen Strom in das Energiespeichersystem zuzuführen.

15. Computerprogramm mit Programmcodemitteln zur Durchführung des Verfahrens nach Anspruch 13, wenn das Programm auf einem Computer ausgeführt wird.

16. Computerlesbares Medium mit einem Computerprogramm, das einen Programmcode zum Durchführen des Verfahrens nach Anspruch 13 umfasst, wenn das Programmprodukt auf einem Computer ausgeführt wird.

## Revendications

1. Système consommateur de gaz (200) pour véhicule (10), le système consommateur de gaz étant configuré pour générer de l'énergie en consommant du gaz, le système consommateur de gaz comprenant :
- un consommateur de gaz (202) comportant une entrée (210) configurée pour recevoir un flux de gaz,
- au moins un réservoir de gaz (204, 204', 204"), le réservoir de gaz comportant une sortie de réservoir de gaz (212),
- un conduit (206) reliant la sortie du réservoir de gaz du réservoir à l'entrée du consommateur de gaz, et
- un manchon allongé (208) fixé à l'entrée du consommateur de gaz et à la sortie de réservoir de gaz du réservoir de gaz, et le conduit étant logé à l'intérieur du manchon allongé, **caractérisé en ce que**
le manchon allongé comprend une sortie de manchon (218) configurée pour évacuer les fuites de gaz entre le consommateur de gaz et le réservoir de gaz à l'écart du système consommateur de gaz.

2. Système consommateur de gaz (200) selon la revendication 1, le système consommateur de gaz comprenant une pluralité de réservoirs de gaz (204, 204', 204"), chaque réservoir de gaz ayant une sortie de réservoir de gaz individuelle, le conduit étant connecté entre chaque sortie de réservoir de gaz et l'entrée du consommateur de gaz, le conduit s'étendant en outre entre chacune de la pluralité de sorties de réservoir de gaz.

3. Système consommateur de gaz (200) selon l'une quelconque des revendications 1 ou 2, dans lequel le manchon allongé comprend une partie allongée (214) s'étendant dans une direction s'éloignant du consommateur de gaz et du réservoir de gaz, la sortie de manchon (218) étant agencée à une position d'extrémité de la partie allongée.

4. Système consommateur de gaz (200) selon la revendication 3, dans lequel la partie d'extrémité de la partie allongée est configurée pour être agencée au-dessus, ou en arrière, d'un habitacle du véhicule.

5. Système consommateur de gaz (200) selon l'une quelconque des revendications précédentes 2 à 4, dans lequel chacun de la pluralité de réservoirs comprend une soupape (220, 220', 220') à la sortie du réservoir de gaz.

6. Système consommateur de gaz (200) selon la revendication 5, dans lequel chacune des soupapes est logée à l'intérieur du manchon allongé.

7. Système consommateur de gaz (200) selon l'une quelconque des revendications précédentes, le système consommateur de gaz comprenant en outre un capteur de gaz (330) agencé dans le manchon allongé, le capteur de gaz étant configuré pour détecter la présence d'une fuite de gaz dans le manchon allongé.

8. Système consommateur de gaz (200) selon la revendication 7, dans lequel le capteur de gaz est positionné à la sortie du manchon (218).

9. Système consommateur de gaz (200) selon l'une quelconque des revendications 7 ou 8 en combinaison avec l'une quelconque des revendications 5 ou 6, le système consommateur de gaz comprenant en outre une unité de commande (1) comprenant un circuit de traitement connecté de manière opérationnelle à chacune des soupapes, le circuit de traitement étant configuré pour :
- recevoir un signal du capteur de gaz, le signal indiquant un niveau de fuite de gaz présent dans le manchon allongé,
- comparer le niveau de fuite de gaz avec un seuil prédéterminé, et
- commander les soupapes pour qu'elles prennent une position fermée dans laquelle le gaz ne peut quitter les réservoirs de gaz lorsque le niveau de fuite de gaz est supérieur au seuil prédéterminé.

10. Système consommateur de gaz (200) selon la revendication 9, dans lequel le circuit de traitement est en outre connecté de manière opérationnelle au consommateur de gaz, le circuit de traitement étant configuré pour commander le consommateur de gaz pour qu'il adopte un mode de non-génération d'énergie lorsque le niveau de fuite de gaz est supérieur au seuil prédéterminé.

11. Système consommateur de gaz (200) selon l'une quelconque des revendications 9 ou 10, dans lequel le circuit de traitement est connecté à un afficheur d'interface homme-machine, le circuit de traitement étant configuré pour transmettre un signal indicatif d'une fuite de gaz à l'afficheur d'interface homme-machine lorsque le niveau de fuite de gaz est supérieur au seuil prédéterminé.

12. Système consommateur de gaz (200) selon l'une quelconque des revendications précédentes, dans lequel le consommateur de gaz est une pile à combustible.

13. Procédé de commande d'un système consommateur de gaz, le système consommateur de gaz comprenant un consommateur de gaz comprenant une entrée configurée pour recevoir un flux de gaz, au moins un réservoir de gaz, le réservoir de gaz comprenant une sortie de réservoir de gaz munie d'une soupape, un conduit reliant la sortie du réservoir de gaz à l'entrée du consommateur de gaz, un manchon allongé fixé à l'entrée du consommateur de gaz et à la sortie du réservoir de gaz, le conduit étant logé à l'intérieur du manchon allongé, le manchon allongé comprenant une sortie de manchon configurée pour acheminer les fuites de gaz entre le consommateur de gaz et le réservoir de gaz loin du système consommateur de gaz, et une unité de commande comprenant un circuit de traitement, le procédé comprenant les étapes consistant à :
- déterminer, par le circuit de traitement, un niveau de fuite de gaz présent dans le manchon allongé, et
- commander, par le circuit de traitement, la soupape pour prendre une position fermée dans laquelle le gaz est empêché de quitter le réservoir de gaz lorsque le niveau de fuite de gaz est supérieur à un seuil prédéterminé.

14. Véhicule comprenant un moteur de traction électrique, un système de stockage d'énergie configuré pour alimenter en énergie électrique le moteur de traction électrique pendant la propulsion, et un système consommateur de gaz selon l'une quelconque des revendications 1 à 12, le consommateur de gaz étant connecté électriquement au système de stockage d'énergie et configuré pour alimenter le système de stockage d'énergie en énergie électrique générée dans le consommateur de gaz.

15. Programme informatique comprenant un moyen de code de programme pour exécuter le procédé selon la revendication 13 lorsque le programme est exécuté sur un ordinateur.

16. Support non transitoire lisible par ordinateur comportant un programme informatique comprenant un code de programme pour exécuter le procédé selon la revendication 13 lorsque le produit de programme est exécuté sur un ordinateur.
